# EUROPÄISCHE PATENTSCHRIFT

(11) **EP 2 948 596 B1**
(45) Veröffentlichungstag und Bekanntmachung des Hinweises auf die Patenterteilung: **07.03.2018**
(21) Anmeldenummer: 14700619.1
(22) Anmeldetag: 14.01.2014
(51) Int. Cl.: E02D 27/50, E02D 27/52

(54) **STRÖMUNGSKRAFTWERK**
HYDRO POWER PLANT
HYDROLIENNE

(30) Priorität: 24.01.2013 DE 102013001212
(43) Veröffentlichungstag der Anmeldung: 02.12.2015
(73) Patentinhaber: Voith Patent GmbH, 89522 Heidenheim (DE)
(72) Erfinder: SOMMERKORN, Klaus, 89518 Heidenheim (DE)
(74) Vertreter: Dr. Weitzel & Partner
(86) Internationale Anmeldenummer: PCT/EP2014/050554
(87) Internationale Veröffentlichungsnummer: WO 2014/114520

(56) Entgegenhaltungen:
- WO-A1-2012/080717

## Beschreibung

Die Erfindung betrifft ein Strömungskraftwerk gemäß dem Oberbegriff von Anspruch 1.

Strömungskraftwerke sind beispielsweise aus der Druckschrift WO 2012/080717 A1 bekannt. Sie können in Form von freistehenden Einheiten mit rotorförmigen Wasserturbinen zur Energiegewinnung aus einem Fließgewässer oder einer Meeresströmung, insbesondere einer Gezeitenströmung, ausgebildet sein. Derartige Strömungskraftwerke können aber auch als Onshore- oder Offshore-Windkraftanlagen ausgebildet sein.

Typischerweise sind derartige Strömungskraftwerke vollständig tauchende Anlagen, sodass die wenigstens eine Turbine des Strömungskraftwerks in dessen Betrieb vollständig unter Wasser angeordnet ist. Die Turbine ist dabei von einer Gründungsstruktur getragen. Derartige Gründungsstrukturen sind üblicherweise Schwerkraftfundamente oder Fundamente aus Stahlkonstruktionen wie zum Beispiel Dreibeine oder Pfahl- oder Pfostenbauten. In der Regel sind solche Gründungsstrukturen zur Turbine hin pfostenartig ausgeführt. Der Querschnitt dieser muss dabei nicht notwendigermaßen rund sein, denn auch ein ovaler oder linienförmiger Querschnitt ist denkbar. Die vorliegende Erfindung betrifft derartige gattungsgemäßige Strömungskraftwerke.

Die Gründungsstruktur nimmt dabei Kräfte und Momente auf, die durch die Anströmung des Strömungskraftwerks entstehen. Sie leitet diese in das umgebende Erdreich, beispielsweise den Gewässergrund, weiter.

Gründungsstrukturen können beispielweise einen Stützpfeiler umfassen, der mit einem Fundament am Gewässergrund verbunden ist. Herkömmlich wird dabei der Stützpfeiler sich zur Turbine hin möglichst verjüngt ausgeführt. Dadurch wird eine Strömungsbeeinflussung des als Strömungswiderstand wirkenden verjüngten Querschnitts des Stützpfeilers vermindert. Dies wirkt sich auch positiv auf den Wirkungsgrad eines solchen Strömungskraftwerks aus. Die schlanke Ausführung des Stützpfeilers im Bereich der Anbindung an die Turbine hat jedoch den Nachteil, dass insbesondere in dessen unterem Teil eine kritische Stelle der Festigkeit vorliegt. An dieser kann oftmals ein Grenzwert für die maximale oder schwellende Last der Materialspannung des Stützpfeilers erreichen, welcher dem Maximalwert für die erwartete Lebensdauer des Stützpfeilers entspricht. Damit ist eine weitere Reduktion des Querschnitts des Stützpfeilers technisch nicht mehr möglich.

Der vorliegenden Erfindung liegt daher die Aufgabe zugrunde, ein Strömungskraftwerk anzugeben, welches die Nachteile des Standes der Technik vermeidet. Insbesondere soll eine besonders schlanke Gründungsstruktur angegeben werden, bei der die im Betrieb des Strömungskraftwerks auftretenden Spannungen reduziert sind.

Diese Aufgabe wird durch ein Strömungskraftwerk mit den Merkmalen gemäß den unabhängigen Ansprüchen gelöst. Die abhängigen Ansprüche beschreiben vorteilhafte und besonders zweckmäßige Ausgestaltungen der Erfindung.

Ein erfindungsgemäßes Strömungskraftwerk umfasst wenigstens eine Turbine sowie eine Gründungsstruktur, an der sich die wenigstens eine Turbine abstützt. Dabei umfasst die Gründungsstruktur wenigstens einen Stützpfeiler, der mit einem Fundament oder eine Struktur am Gewässergrund verbunden ist. Gemäß der Erfindung sind im Bereich der Anbindung des Stützpfeilers an das Fundament innerhalb oder außerhalb des Stützpfeilers Zuganker zur Aufbringung einer Vorspannkraft angeordnet.

Gemäß einer Ausführungsform umfasst ein Strömungskraftwerk wenigstens eine Turbine sowie eine Nabe mit wenigstens einem Rotorblatt. Erfindungsgemäß sind innerhalb des Rotorblatts und insbesondere im Bereich der Anbindung des Rotorblatts an die Nabe innerhalb oder außerhalb des Rotorblatts Zuganker zur Aufbringung einer Vorspannkraft angeordnet. Auch Kombinationen aus mit Zugankern versehenen Rotorblättern und mit Zugankern versehenen Stützpfeilern sind denkbar.

Bevorzugt sind die Zuganker im eingebauten Zustand des Stützpfeilers beziehungsweise des Rotorblatts vorgespannt.

Die Zuganker übertragen nur Zugkräfte, nicht aber Druck- oder Biegekräfte. Dadurch werden in der Gründungsstruktur auftretende Zugkräfte ausschließlich über die Zuganker in das Fundament beziehungsweise in die Nabe des Rotors eingeleitet. Hingegen werden die verbleibenden Kräfte und Momente, insbesondere Druck- und Schubkräfte, von dem die Zuganker umgebenden Material des Stützpfeilers in das Fundament und jene des oder der Rotorblätter in die Nabe übertragen. Fundament und Stützpfeiler können dabei vollständig oder teilweise aus Beton oder Stahl bestehen. Die Zuganker können dabei bevorzugt aus Stahl, insbesondere Spannstahl hergestellt sein.

Gemäß einer Ausführungsform können die Zuganker in Form von Fasern, Seilen, Stäben oder Rohren vorliegen. Bei Fasern können diese in Form von Gelegen, Gewirken, Gestricken oder Geweben vorliegen. Als Stäbe sind Vollstäbe, beispielsweise mit Gewinden nach Art von Schrauben, denkbar.

Dabei kann der Zugmodul der Zuganker ein Vielfaches, insbesondere das Fünf- bis Zehnfache, bevorzugt Fünf- bis Zwanzigfache des Materials des Stützpfeilers beziehungsweise der Rotorblätter, in dem die Zuganker eingebettet sind, betragen.

Die Erfindung ist anhand von Ausführungsbeispielen erläutert.

Es zeigen:
- Figur 1a: eine Vorderansicht eines Unterwasserströmungskraftwerks;
- Figur 1b: eine weitere Ausführungsform eines tauchenden Unterwasserkraftwerks;
- Figur 2: eine bevorzugte Ausführungsform der Gründungsstruktur des erfindungsgemäßen Strömungskraftwerks.

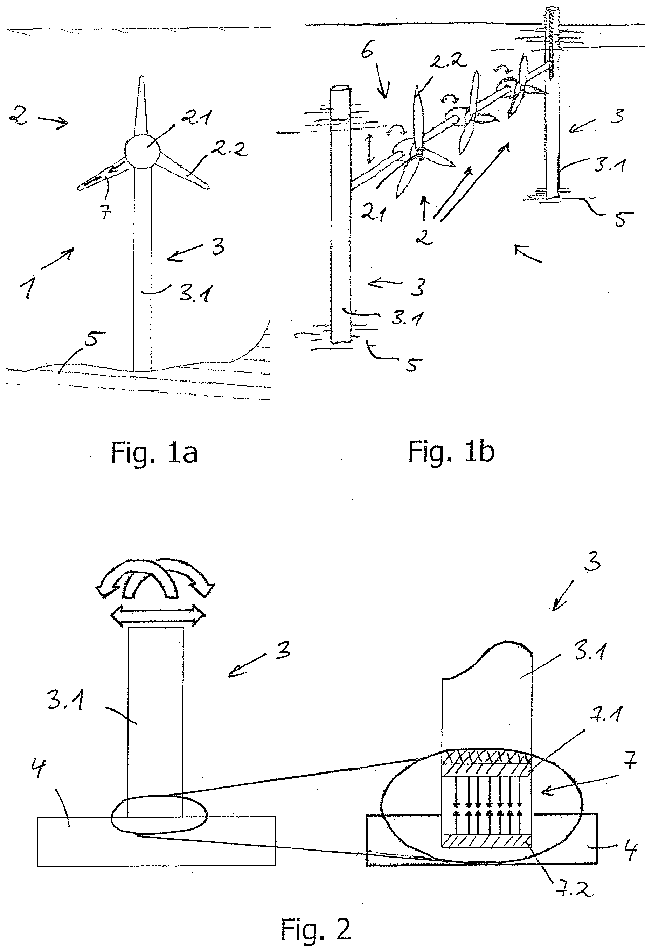

In Figur 1a ist ein Strömungskraftwerk 1 in einer Vorderansicht in Hauptströmungsrichtung des umgebenden Mediums, hier Wasser, dargestellt. Das Strömungskraftwerk 1 kann Teil eines Strömungskraftwerksparks sein mit einer Vielzahl von in und quer zur Hauptströmungsrichtung angeordneten Strömungskraftwerken, welche hier nicht gezeigt sind.

Das Strömungskraftwerk 1 gemäß Figur 1a umfasst eine Turbine 2, hier in Form eines Rotors mit einer Nabe 2.1 und vorliegend drei Rotorblättern 2.2. Selbstverständlich könnten mehr oder weniger als drei Rotorblätter 2.2 vorgesehen sein. Nabe 2.1 und Rotorblätter 2.2 sind miteinander drehfest ausgeführt. Die Turbine 2 kann an einen nicht dargestellten Antriebsstrang angeschlossen sein, um Bewegungsenergie des Mediums in Rotationsenergie der Turbine 2 umzuwandeln. Dazu kann die Nabe 2.1 in dem Antriebsstrang mit einem nicht gezeigten Generator zu dessen Antrieb koppelbar sein. Turbine 2 ist vorliegend an eine Gründungsstruktur 3 angebunden. Letztere umfasst vorliegend einen einzigen Stützpfeiler 3.1, der mit einem nicht dargestellten Fundament am Gewässergrund 5 verbunden ist. Im vorliegenden Fall ist der Stützpfeiler 3.1 auf seiner gesamten Länge zylindrisch ausgeführt. Dies ist jedoch nicht zwingend notwendig. So könnte die Querschnittsform von der Kreisform abweichen. Insbesondere elliptische, ovale oder stromlinienförmige Querschnittsformen sind dabei denkbar. Auch kann sich der Querschnitt des Stützpfeilers 3.1 in Richtung weg vom Gewässergrund 5 hin zu der Turbine 2 verjüngen.
Figur 1b zeigt eine weitere Ausführungsform eines Strömungskraftwerks in einer räumlichen Darstellung. Im vorliegenden Fall sind dabei drei Turbinen 2 vorgesehen, jeweils eine Nabe 2.1 und drei Rotorblätter 2.2 umfassend. Jede der drei Turbinen ist an einem Quertragwerk 6 gehalten, das vorliegend als Querbalken ausgebildet ist. Anstelle des Querbalkens wären auch andere, insbesondere diagonal verstrebte Verbindungen oder gitter- oder matrixförmige Verstrebungen denkbar. Das Quertragwerk 6 wird im vorliegenden Fall an seinen beiden Enden von jeweils einer Gründungsstruktur 3, ebenfalls jeweils einen Stützpfeiler 3.1 umfassend, gehalten. Gründungsstruktur 3, Turbinen 2 und Quertragwerk 6 bilden vorliegend das Strömungskraftwerk 1. Wie mit Bezug auf Figur 1a bereits ausgeführt, kann eine Mehrzahl der in Figur 1b dargestellten Strömungskraftwerke 1 in Hauptströmungsrichtung des Mediums neben- und/oder hintereinander angeordnet sein. Auch können die Turbinen 2 jeweils separat oder gemeinsam einen Generator (nicht dargestellt) antreiben.

Ebenfalls kann jede Turbine 2 gegenüber dem Quertragwerk 6 schwenkbar sein, auch unabhängig von den verbleibenden. Auch kann der Querträger 6 alternativ oder zusätzlich entlang der Längsachse der Gründungsstruktur, also in Richtung auf den Wasserspiegel oder den Gewässergrund 5, verschiebbar angeordnet sein.

In Figur 2 ist eine mögliche Ausführungsform der Gründungsstruktur 3, wie sie in den Figuren 1a und 1b zum Einsatz kommen kann, stark vereinfacht dargestellt. Aus dem linken Teil der Figur 2 ist der Stützpfeiler 3.1 zu erkennen. Er ist in ein Fundament 4, welches an dem Gewässergrund 5 (Figuren 1a und 1b) befestigt ist, eingesetzt. Wie durch die Pfeile angedeutet, werden Reaktionskräfte der Turbine 2 infolge der Umströmung mit dem Medium über die Gründungsstruktur 3 an das Fundament 4 übertragen. Dabei kann es sich um Zug-, Druck-, Schub-, Torsions- und/oder Biegekräfte sowie zugehörige Momente handeln.

Eine kritische Stelle, an denen die genannten Kräfte und Momente erhebliche Spannungen hervorrufen, ist der Bereich des Übergangs des Stützpfeilers 3.1 zum Fundament 4. Hier können die Spannungen in dem Material des Stützpfeilers 3.1 den Maximalwert für die erwartete Lebensdauer desselben überschreitet.

Um dies zu verhindern, werden gemäß der Erfindung Zuganker 7 insbesondere im Übergang vom Fuß des Stützpfeilers 3.1 in das Fundament 4 eingebracht. Die Zuganker 7 sind in der vergrößerten rechten Ansicht der Figur 2 in Form von Kraftpfeilen stilisiert dargestellt.

Die Zuganker sind dabei vorliegend zwischen zwei Ankerstrukturen 7.1 und 7.2 vorgespannt, hier als Platten ausgebildet. Beide Ankerplatten 7.1, 7.2 stehen sich hier gegenüber. Die obere, näher an der Turbine 2 und oberhalb des Fundaments 4 liegende Ankerplatte 7.1 ist an den Stützpfeiler 3.1 angebunden oder in diesen eingegossen. Die gegenüberliegende untere Ankerplatte 7.2 ist im Bereich des Fundaments 4 eingebracht und kann ebenfalls mit dem Fußende des Stützpfeilers 3.1 verbunden oder auch in diesen eingegossen sein. Zwischen den Ankerplatten 7.1, 7.2 kann ebenfalls das Material des Stützpfeilers 3.1 vorgesehen sein. Dies ist jedoch nicht zwingend erforderlich. Die Zuganker 7 sind zwischen den beiden Ankerplatten 7.1 und 7.2 vorgespannt. Sie verlaufen im vorliegenden Fall mit ihren Längsachsen im Wesentlichen parallel zur Längsachse des Stützpfeilers 3 und damit senkrecht oder winklig zu der Drehachse der Turbine 2 beziehungsweise der Nabe 2.1. Eine Verwendung von Ankerplatten ist jedoch nicht zwingend für die vorliegende Erfindung notwendig. Auch andere Mittel, mittels denen sich eine Vorspannung auf die Zuganker 7 aufbringen lässt, sind denkbar.

Auch könnten der Stützpfeiler 3.1 sowie das Fundament 4, welche die Gründungsstruktur 3 bilden, einteilig, beispielsweise durch Gießen, hergestellt sein, sodass die Zuganker sowohl in den Stützpfeiler 3.1 als auch in das Fundament 4 eingebettet sind.

Durch das erfindungsgemäße Einbringen einer Vorspannung in die Gründungsstruktur werden die Materialspannungen im Übergang von Stützpfeiler 3.1 zu Fundament 4 erheblich reduziert. Die Überlagerung der Vorspannung mit den sonstigen Betriebslasten ergibt dabei eine reduzierte Materialspannung in diesem Bereich und erhöht hierdurch die Lebensdauer der Gründungsstruktur.

Alternativ oder zusätzlich könnten die Zuganker 7 auch in dem Fundament 4, insbesondere in dessen gesamter Ausdehnung, vorgesehen sein. Dabei gilt das bereits zu den Ausführungsformen Gesagte analog.

Zusätzlich oder alternativ wäre es auch denkbar, derartige Zuganker 7 in den Rotorblättern 2.2 und/oder in der Nabe 2.1 der Turbine 2 einzubetten. Bevorzugt könnten diese parallel zur Längsachse der Rotorblätter 2.2 verlaufen und ebenfalls vorgespannt sein. Dies ist in Figur 1a symbolisch durch die beiden Pfeile an einem der Rotorblätter 2.2 angedeutet. Auch hier gilt das bereits zu den Ausführungsformen Gesagte. So sind auch Kombinationen der besagten Ausführungsformen denkbar. Insbesondere können die Strömungsmaschinen dann Zuganker sowohl in den Rotorblättern als auch in der Gründungsstruktur und insbesondere in den Stützpfeilern aufweisen.

Die Erfindung lässt sich anwenden bei Strömungskraftwerken, die vollständig unter Wasser sind, somit auch die Turbinen. Die Erfindung lässt sich aber auch anwenden für Off-Shore-Windturbinen, die ein auf dem Meeresgrund befindliches Fundament aufweisen, dass einen oder mehrere Pfeiler trägt, und bei den sich die Turbinen oberhalb des Wasserspiegels befinden.

### Bezugszeichen liste

- 1: Strömungskraftwerk
- 2: Turbine
- 2.1: Nabe
- 2.2: Rotorblatt
- 3: Gründungsstruktur
- 3.1: Stützpfeiler
- 4: Fundament
- 5: Gewässergrund
- 6: Quertragwerk
- 7: Zuganker
- 7.1: Ankerplatte
- 7.2: Ankerplatte

## Patentansprüche

1. Strömungskraftwerk, umfassend:
1.1 wenigstens eine Turbine (2);
1.2 eine Nabe (2.1) mit wenigstens einem Rotorblatt (2.2);
**dadurch gekennzeichnet, dass**
1.3 innerhalb oder außerhalb des Rotorblatts (2.2) und insbesondere im Bereich der Anbindung des Rotorblatts (2.2) an die Nabe (2.1) Zuganker (7) zur Aufbringung einer Vorspannkraft angeordnet sind.

2. Strömungskraftwerk (1) gemäß Anspruch 1, **dadurch gekennzeichnet, dass** die Zuganker (7) im eingebauten Zustand des Rotorblatts (2.2) vorgespannt sind.

3. Strömungskraftwerk (1) gemäß Anspruch 1 oder 2, **dadurch gekennzeichnet, dass** die Zuganker (7) in Form von Fasern, Seilen, Stäben oder Rohren vorliegen.

## Claims

1. A flow power plant comprising:
1.1 at least one turbine (2);
1.2a hub (2.1) with at least one rotor blade (2.2);
**characterized in that**
1.3tension rods (7) for applying a pretensioning force are arranged inside or outside the rotor blade (2.2) and in particular in the region of the connection of the rotor blade (2.2) to the hub (2.1).

2. A flow power plant (1) according to claim 1, **characterized in that** the tension rods (7) are pretensioned in the installed state of the rotor blade (2.2).

3. A flow power plant (1) according to claim 1 or 2, **characterized in that** the tension rods (7) are present in the form of fibres, ropes, rods or tubes.

## Revendications

1. Hydrolienne comprenant :
1.1 au moins une turbine (2) ;
1.2 un moyeu (2.1) avec au moins une pale de rotor (2.2) ;
**caractérisée en ce que**
1.3 des tirants d'ancrage (7) sont prévus sur le moyeu (2.1), à l'intérieur ou à l'extérieur de la pale de rotor (2.2) et en particulier au niveau de la liaison de la pale de rotor (2.2), pour l'application d'une force de précontrainte.

2. Hydrolienne (1) selon la revendication 1, **caractérisée en ce que** les tirants d'ancrage (7) sont précontraints dans l'état assemblé de la pale de rotor (2.2).

3. Hydrolienne (1) selon la revendication 1 ou 2, **caractérisée en ce que** les tirants d'ancrage (7) sont réalisés sous la forme de fibres, de câbles, de barres ou de tubes.
